# EUROPEAN PATENT SPECIFICATION

(11) **EP 0 876 275 B1**
(45) Date of publication and mention of the grant of the patent: **06.02.2002**
(21) Application number: 97946039.1
(22) Date of filing: 14.11.1997
(51) Int. Cl.: B63H 25/46, B60V 1/11

(54) **HYDRAULIC SYSTEM FOR MANOEUVRING BOATS, SHIPS AND CRAFTS IN GENERAL**
HYDRAULISCHES SYSTEM ZUM MANÖVRIEREN VON BOOTEN, SCHIFFEN UND FAHRZEUGEN IM ALLGEMEINEN
SYSTEME HYDRAULIQUE POUR LA MANOEUVRE DE BATEAUX, DE NAVIRES ET PLUS GENERALEMENT D'ENGINS

(30) Priority: 20.11.1996 IT RM960793
(43) Date of publication of application: 11.11.1998
(73) Proprietor: De Risi, Felice, 00199 Roma (IT)
(72) Inventor: De Risi, Felice, 00199 Roma (IT)
(74) Representative: Mascioli, Alessandro
(86) International application number: PCT/IT97/00279
(87) International publication number: WO 98/22337

(56) References cited:
- WO-A-93/21063
- GB-A- 354 164
- US-A- 1 702 222
- US-A- 4 265 192
- US-A- 4 807 552
- SHIPPING WORLD AND SHIPBUILDER., vol. 152, no. 3723, 17 December 1964, LONDON GB, page 756 XP002058684
- NN.: "Omnithruster eases vessel control" OFFSHORE (INC. THE OILMAN)., vol. 37, no. 5, May 1977, TULSA US, pages 388-392, XP002058685
- NN.: "Bow jet thrust system" MOTORSHIP., vol. 48, no. 569, December 1967, LONDON GB, page 394 XP002058686

## Description

The present invention concerns a hydraulic system for the control of boats, ships and crafts in general, working on the principle of action and reaction.

It is known that the systems used until now on ships and boats for facilitating the lateral movements during manoeuvres in small spaces or with side winds, are essentially based on manoeuvre propellers installed in fitting housings arranged below the floating.

Moreover, said systems are a great risk for what concerns safety due to the presence of great openings below the floating line, and a limit for the maintenance and for the hydrodynamic advancement; furthermore, they have the disadvantage of requesting expensive fitting onto the hulls that use them, like e.g. the insertion ahead of passing-through tubular structures of great diameter that may contain transversal propellers.

Furthermore, on some boats - like sailing boats or some motor-boats - which have small head wheels, such systems can not be applied.

The system known from Shipping World and Shipbuilder (vol. 152, n. 3723, 17.12.64, London GB, page 756 XPOO2058684, Kawasaki Jet Thruster) applies the principle of action and reaction inside the water, exploiting the mass of the outlet water. Such a system requests that the hull to which it must be installed be adapted for receiving the nozzle.

It is the aim of the present invention to make easy the manoeuvres of ships and boats of all kinds, making use of a system based on the principle of action and reaction, determined by a jet of a fluid generated by pumps housed in the hull and that comes out under pressure from suitable nozzles, possibly internally shaped like a Venturi pipe or similar so as to obtain, in the outlet points of the fluid and due to fitting throttlings, a direct force in opposed sense and proportional to the pressure and to the volume of pumped fluid, exploiting above all the speed of the outlet water.

Consequently, the present invention provides the presence of nozzles on opposed bulwarks at the end of the stem that will determine, following to the outlet of the fluid under pressure above the sea level, the displacement for reaction from the head of the boat and therefore the possibility of immediately performing right or left curves, according to the employed nozzle.

In a similar way, rotations around the barycentre will be allowed with the help of corresponding nozzles arranged on opposed bulwarks near the stem; the hydraulic reaction operation of the two nozzles arranged on the same bulwark will determine the parallel motion of the whole craft for coming alongside to quays or for performing another manoeuvre.

The advantages of the system according to the present invention are evident.

The system according to the present invention will be described more in detail hereinbelow relating to the enclosed drawings, in which an embodiment is shown.

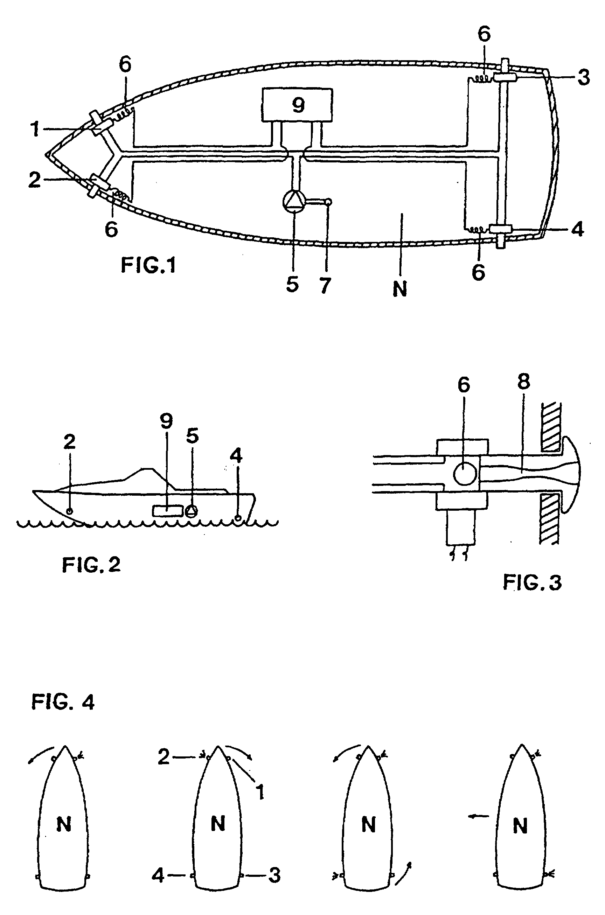

Figure 1 shows a scheme of a hydraulic system for the control of boats, ships and crafts in general, installed onto a boat.

Figure 2 shows a lateral view of a possible localization of the nozzles on a boat.

Figure 3 shows in detail the internal structure of a ejector nozzle.

In figure 4, the arrows show possible manoeuvres of hulls provided with the system according to the present invention.

Figures 5 and 6 show, in a respetive axonometric view and transversal section, a variant of ejector nozzle with internal throttling.

The enclosed figures show a hydraulic system for the control of boats, ships and crafts in general, comprising:
- two or more front nozzles 1, 2 and/or two or more back nozzles 3,4, with dimensions proportioned to those of the boat N and to the capacity of pumps 5 housed in the hull and fixed to the bulwarks in determined points by means of passing-through holes and operated under control by means of valves 6 operated with mechanical, hydraulic, electric systems or engines or of other kind;
- one or more pumps 5 housed in the hull N, operated by the engine of the boat by means of electro-magnetic pulleys, by means of hydraulic or electric transmissions or of other kind, or by an autonomous motor energy source of any kind, for supplying the thrust to the fluid under pressure, that may be water directly collected from the bottom through intake 7;
- an internal structure of said nozzles 1, 2, 3, 4, operated by the valves 6 and having the shape of a throttling 8 of a Venturi pipe, for increasing and adjusting the hydraulic thrust;
- a control board 9 arranged on the bridge, for the localization of the electric switches or of the operating controls.

The functioning of the hydraulic system for the control of boats, ships and crafts in general, according to the present invention, may be described as follows:
- the engine of boat N operates a pump 5 by means of pulleys with electromagnetic clutch;
- said pump sucks water from the bottom of said boat N, by means of an intake 7 from the sea;
- the water is pushed through pipes to nozzles 1,2,3,4 choses for the manoeuvre, arranged on the bulwards and operated by valves 6;
- when the electric switches provided on the bridge are operated, electric feeding is supplied to the pulley, that starts the pump, at the same time to the vales chosen for supplying the thrust in the desired points.

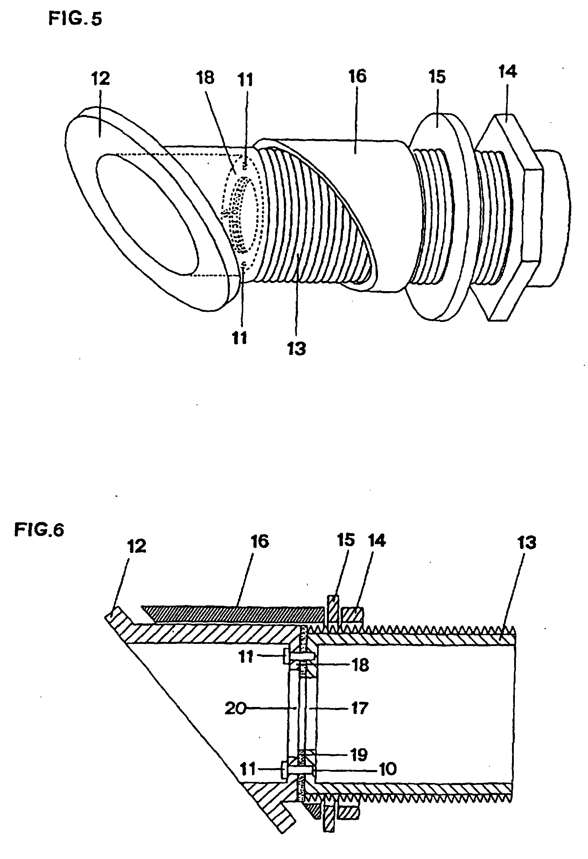

In the variant shown in figures 5, 6, the ejector nozzle consists of a plurality of elements asembled by means of screws 11:
- a cylindric body externally threaded, with the end section reduced by the internal flange with central hole 17;
- an external counterflange fastened to said body 13 by means of said screws 11 and with the interposition of a sealing gasket 19, and shaped in one single piece with a metal ring 12 with different inclinations that may be fitted to the different shapes of the bulwarks, and with an internal flange 18 in specular coupling with said internal flange 10 with a central hole 20 of a diameter slightly greater than the one of said central hole 17, so as not to hinder the outflow of the liquid jet that is accelerated and which, due to the principle of action and reaction, determines a considerable direct thrust in the opposite sense, proportional to the liquid quantity pumped;
- a spacer 16 that brings back the plane to be normal to the cylinder through the washer 15 and the nut 14.

The installation of above mentioned nozzle may be described as follows:
- a passing-through hole having the same diameter of the external diameter of the cylindric body 13, in performed in the bulwark;
- a metal ring 12 is chosen; having an inclination corresponding to the one of the bulwark;
- the nozzle at the bulwark is blocked by tightening the nut 14;
- the nozzle is connected to the hydraulic circuit, making use of the remaining threaded part of the cylindric body 13.

For mounting in small spaces the latter nozzle described, it appears to be possible to separate the body 13 from the flange 18 by unscrewing screws 11, and previously connecting said body 13 to the hydraulic circuit and then proceeding with the coupling of the parts through the passing-through hole performed in the bulwark, screwing again the screws 11 and tightening the nut 14, that previsously had been left loose.

## Claims

1. A hydraulic system for the control of boats, ships and crafts in general, working on the principle of action and reaction, comprising:
- two or more front nozzles (1, 2) and/or two or more back nozzles (3,4), with dimensions proportioned to those of the boat N and to the capacity of pumps (5) housed in the hull and fixed to the bulwarks in determined points by means of passing-through holes and operated under control of valves (6) operated with mechanical, hydraulic, electric systems or engines or of other kind;
- one or more pumps (5) housed in the hull (N), operated by the engine of the boat by means of electro-magnetic pulleys, by means of hydraulic or electric transmissions or of other kind, or-by an autonomous motor energy source of any kind, for supplying the thrust to the fluid under pressure, that may be water directly collected from the bottom through intake (7);
- a control board 9 arranged on the bridge, for the localization of the electric switches or of the operating controls; and
**characterized in** an internal structure of said nozzles (1, 2, 3, 4) having the shape of the throttle (8) of a Venturi pipe or provided with an internal flange (10), for increasing and adjusting the hydraulic thrust.

2. A hydraulic system for the control of a boat according to claim 1, **characterized in that**, when the electric switches arranged on the bridge are operated, at the same time electric feeding is supplied to the pulleys, which start the pumps, and to the chosen valves.

3. A hydraulic system for the control of a boat according to claim 1, **characterized in** the ejector nozzles (1,2,3,4) comprising:
- a cylindric body (13) externally threaded, with the end section reduced by the internal flange (10) with central hole (17);
- an external counterflange fastened to said body (13) by means of screws (11) and with the interposition of a sealing gasket (19), and shaped in one single piece with a metal ring (12) with different inclinations that may be fitted to the different shapes of the bulwarks, and with an internal flange (18) in specular coupling with said internal flange (10) with a central hole (20) of a diameter slightly greater than the one of said central hole (17), so as not to hinder the outflow of the liquid jet that is accelerated and which, due to the principle of action and reaction, determines a considerable direct thrust in the opposite sense, proportional to the liquid quantity pumped;
- a spacer (16) that brings back the plane to be normal to the cylinder through a washer (15) and a nut (14).

## Patentansprüche

1. Hydraulisches System zur Steuerung von Booten, Schiffen und Wasserfahrzeugen im allgemeinen, das nach dem Prinzip von Aktion und Reaktion wirkt, bestehend aus:
- zwei oder mehreren vorderen Düsen (1, 2) und/oder zwei ruckwartigen Düsen (3, 4) deren Ausmass mit dem des Bootes (N) in Einklang steht, und die der Forderleistung von Pumpen (5), die im Schiffsrumpf untergebracht sind, entsprechen, die an bestimmten Stellen durch Durchgangsöffnungen an den Bootswänden befestigt sind, und die zum Kommando der Ventile (6) befähigt sind, die durch mechanische, hydraulische, elektrische Systeme oder durch Motoren oder andere Systeme in Bewegung gesetzt werden;
- einer oder mehreren Pumpen (5) die im Schiffsrumpf (N) untergebracht sind und die durch den Motor des Wasserfahrzeuges in Bewegung gesetzt werden und zwar durch elektromagnetische Riemenscheiben, hydraulischen, elektrischen oder anderen Antrieb, oder durch eine autonome Motorenergiequelle jeglicher Art, um der Flüssigkeit, die unter Druck steht, die Schubkraft zu geben, wobei es sich um durch die Entnahmeleitung (7) direkt vom Grund entnommenes Wasser handeln kann;
- einer Schalttafel (9), auf dem Brückenkopf vorgesehen, zur Lokalisierung der elektrischen Betätigungsschalter, und;
**gekennzeichnet durch** eine innere Struktur besagter Düsen (1,2,3,4), ausgebildet als Drosselstelle (8) eines Venturirohres oder mit einem inneren Flansch (10) versehen, um den hydraulischen Druck zu erhöhen und zu regulieren.

2. Hydraulisches System zur Steuerung von Booten nach Anspruch 1, **dadurch gekennzeichnet dass** bei Betätigung elektrischer Schalter, die sich auf dem Brückendeck befinden, gleichzeitig elektrischer Strom auf die Riemenscheiben Übertragen wird, die die Pumpen in Bewegung setzen, und auf die vorbestimmten Ventile.

3. Hydraulisches System zur Steuerung von Booten nach Anspruch 1, **gekennzeichnet durch** Dusen ejektoren (1, 2, 3, 4) bestehend aus:
- einem Zylindrischen Körper (13) mit Aussengewinde mit Extremalsektion, die **durch** den inneren Flansch (19) mit zentralem Loch (17) reduziert wird;
- einem ausseren Gegenflansch, dei auf besagtem Körper (13) **durch** Schrauben (11) und die Einlage einer Dichtung (19) befestigt ist und einteilig aus einer Nutmutter (12) mit verschiedenen Neigungen, die sich den verschiedenen Ausbildungen der Bootswände anpassen kann, besteht, und aus einem inneren Flansch (18) in spekularer Passung mit besagtem inneren Flansch (10) mit zentraler Öffnung (20), die einen etwas grosseren Durchmesser als die besagte zentrale Öffnung (17) aufweist, um nicht den Austritt des Flüssigkeitsstrahles, der beschleunigt wird, zu stören und wobei, **durch** das Prinzip von Aktion und Reaktion ein beträchtlicher Druck in entgegengesetzter Richtung im Verhältnis zur gepumpten Flüssigkeit ausgeubt wird;
- einem Abstandsstuck (16) das die normale Flache mittels einer Scheibe (15) und einer Schraubenmutter (14) wieder dem Zylinder zufuhrt.

## Revendications

1. Système hydraulique de gouvernement pour embarcations, bateaux et navires en général, qui agit en base au principe d'action et de réaction. et qui comprenne:
- une ou plusieurs buses antérieures (1, 2) et/ou postérieures (3, 4) de dimensions proportionnées à celles de l'embarcation (N) et à la portée de pompes (5) disposées dans la coque, fixées aux murailles dans des points choisis au travers des trous débouchant, et aptes au gouvernement au moyen de soupapes (6) activées avec des systèmes mécaniques, hydrauliques, électriques ou moteurs ou d'autre type;
- une ou plusieurs pompes (5) logées dans la coque (N), activées par le moteur de l'embarcation au moyen de poulies électromagnétiques, transmissions hydrauliques ou électriques ou d'autre type, ou par une source autonome d'énergie à moteur de chaque genre, pour donner la poussée au fluide à pression, qui peut être de l'eau, prélevé directement du fond par mie prise (7);
- un tableau de commande (9) disposé sur la planche, pour la localisation des interrupteurs électriques d' actionnement, et
**caractérisé par** une structure intérieure de dites bases (1, 2, 3, 4) conformée à étranglement (8) d'un tuyau-Venturi ou doté d'une bride intérieur (10) pour augmenter et régler la poussée hydraulique.

2. Système hydraulique de gouvernement pour embarcations selon la revendication 1, caractérisé du fait que, au moment de l'activation d'interrupteurs électriques disposés sur la planche, cette activation fournit simultanément alimentation électrique aux poulies, qui font partir les pompes, et aux soupapes choisies.

3. Système hydraulique de gouvernement pour embarcations selon la revendication 1, **caractérisé par** buses éjecteurs (1, 2, 3, 4) qui comprennent:
- un corps cylindrique taraudé extérieurement à section extrémale réduite par la bride intérieure (10) avec trou central (17),
- une contre bride extérieure fixée sur dit corps (13) au moyen de visses (11) avec l'interposition d'une garniture d'étanchéité (19) et formée en un soul pièce, par une frette (12) avec inclinations différenciées adaptables aux diverses conformations des murailles et par une bride intérieure (18) en accouplement spéculaire avec dite bride intérieure (10) avec trou central (20) de diamètre un peu supérieur du diamètre de dit trou central (17) pour ne pas entrava la sortie du jet de liquide qui est accéléré et qui, par le principe d'action et de réaction provoque une poussée directe considérable dans la direction opposée, en proportion à la quantité de liquide pompé;
- une entretoise (16) qui reconduit le plan normal au cylindre, au moyen d'une rondelle (15) et d'un écrou (14).
